# EUROPEAN PATENT APPLICATION

(11) **EP 4 210 278 A1**
(43) Date of publication of application: **12.07.2023**
(21) Application number: 23150225.3
(22) Date of filing: 03.01.2023
(51) Int. Cl.: H04L 9/40, G06F 21/50

(54) **METHOD AND SYSTEM FOR ELECTRONIC INSIDER THREAT PREDICTION**

(30) Priority: 05.01.2022 US 202263296794 P
(71) Applicant: Magnet Forensics Inc., Waterloo, ON N2K 0A8 (CA)
(72) Inventor: SALIBA, Jad John, Waterloo N2K 0A8, N2K 0A8 (CA); McQuaid, Jamie, Ontario, N2K 0A8 (CA); AMICK, Harold C., Ontario, N2K 0A8 (CA); Jordan, Dallas, Ontario, N2K 0A8 (CA)
(74) Representative: Humphrey-Evans, Edward John

(57) **Abstract**

A system and associated method for insider threat prediction. The system includes a forensic data source, a threat prediction module, and a data collection module, wherein the data collection module is configured to collect subject data of a subject from the forensic data source, and transmit the subject data to the threat prediction module, wherein the threat prediction module is configured to receive subject data from the data collection module and analyze subject data to generate an insider threat output characterizing the insider threat level of the subject.

## Description

### Technical Field

The following relates generally to electronic threat prediction systems and methods, and more particularly to systems and methods for predicting or detecting an insider threat by collecting and analyzing subject data from a plurality of forensic data sources.

### Introduction

Insider threats may be defined as individuals associated with an entity which may harm the entity. For example, an employee of a corporation may be planning on severing ties with the corporation. It is common for such employees to collect data from employer devices that they believe may be useful for the employee in future roles, possibly at competitor employers. Such data collection may be harmful to the employer.

In other examples, insider threats may be employees who joined an employer for the express purpose of exfiltrating valuable data.

Currently, it may be difficult to detect insider threats. Employees may inherently require access to sensitive corporate data to perform their day-to-day employment activities. Similarly, some employees, depending on their role, may need to remove sensitive corporate data from internal systems and networks, and transfer such data to other external data during their day-to-day activities. It may be difficult to differentiate insider threat activity from authorized employee activity without a complicated, heavy handed, or excessively intrusive monitoring and security system.

Employers, corporations and other entities may benefit from detecting insider threats early. While some IT systems may monitor sensitive information, savvy insider threats may work around current IT security systems.

Accordingly, there is a need for an improved system and method for prediction or detecting insider threats that overcome the disadvantages of existing systems and methods.

### Summary

Described herein, according to an embodiment, is an electronic security system comprising a forensic data source, a threat prediction module, a data collection module configured to collect subject data of a subject from the forensic data source and transmit the subject data to the threat prediction module, wherein the threat prediction module is configured to receive subject data from the data collection module and analyze subject data to generate an insider threat output characterizing the insider threat level of the subject.

According to some embodiments, the forensic data source comprises a plurality of forensic data sources.

According to some embodiments, the subject comprises a subject class data.

According to some embodiments, the threat prediction module analyzes subject data according to the subject class data.

According to some embodiments, subject data is collected according to the subject class.

According to some embodiments, the insider threat output comprises a threat score.

According to some embodiments, forensic data sources include any one or more of personal computers, smartphones, building access systems or surveillance systems.

According to some embodiments, insider threat output generation comprises comparing subject data to historical insider threat subject data.

According to some embodiments, insider threat output generation comprises applying a machine learning based method to subject data.

According to some embodiments, insider threat output generation comprises comparison of subject data to a baseline profile.

According to some embodiments, the subject data comprises subclasses, wherein subclasses comprise world wide web browsing history, peripheral device logs, email records, file transfer records or calendar data.

According to some embodiments, the data collection module collects the subject data from the forensic data source over a network.

According to some embodiments, the data collection module is run at least partially on the forensic data source.

According to some embodiments, the threat prediction module is configured to transmit the insider threat output to an analyst terminal.

According to some embodiments, the system further comprises a response module, wherein the response module is configured to receive a response command from the analyst terminal, and execute a response.

According to some embodiments, the system further comprises a response module, wherein the response module is configured to receive the insider threat output from the threat prediction module, and execute a response.

According to some embodiments, the subject is an employee.

According to some embodiments, the subject is an employee, and the data collection module collects subject data over an employer network.

According to some embodiments, the subject data is collected continuously.

According to some embodiments, the insider threat output is updated continuously.

According to some embodiments, the threat prediction module is executed by a cloud computing device.

Described herein, according to an embodiment, is a computer-implemented method of insider threat prediction. The method comprises collecting subject data of a subject from a forensic data source via a data collection module, analyzing the subject data via a threat prediction module and generate an insider threat output via the threat prediction module characterizing the insider threat level of the subject.

According to some embodiments, the forensic data source comprises a plurality of forensic data sources.

According to some embodiments, the subject comprises a subject class.

According to some embodiments, the insider threat output is generated by a threat prediction module analyzing subject data according to the subject class.

According to some embodiments, subject data is collected according to the subject class.

According to some embodiments, the insider threat output comprises a threat score.

According to some embodiments, forensic data sources may comprise personal computers, smartphones, building access systems or surveillance systems.

According to some embodiments, insider threat output generation comprises comparing subject data to historical insider threat subject data.

According to some embodiments, insider threat output generation comprises applying a machine learning based method to subject data.

According to some embodiments, in insider threat output generation comprises comparison of subject data to a baseline profile.

According to some embodiments, the subject data comprises subclasses, wherein subclasses comprise world wide web browsing history, peripheral device logs, email records, file transfer records or calendar data.

According to some embodiments, subject data is collected from the forensic data source over a network.

According to some embodiments, the method further comprises transmitting the insider threat output to an analyst terminal.

According to some embodiments, the method further comprises transmitting a command from the analyst terminal to a response module, and executing a response.

According to some embodiments, the subject is an employee.

According to some embodiments, the subject is an employee, and the data collection module collects subject data over an employer network.

According to some embodiments, subject data is collected continuously.

According to some embodiments, the insider threat output is updated continuously.

According to some embodiments, the insider threat output is generated by a cloud computing device.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of an insider threat prediction system, according to an embodiment;
Figure 2 is a block diagram of a computing device, according to an embodiment;
Figure 3 is a block diagram of an insider threat prediction system, according to an embodiment;
Figure 4 is a block diagram detailing the threat prediction module of the system of Figure 3, according to an embodiment;
Figure 5 is a block diagram of an insider threat output generated by the system of Figure 3, according to an embodiment;
Figure 6 is a block diagram of an insider threat prediction system, according to another embodiment;
Figure 7 is a block diagram detailing the threat prediction module of the system of Figure 6; and
Figure 8 is a flow chart depicting a method of insider threat prediction, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object-oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to methods and systems for electronic security, and more particularly to methods and systems for predicting or detecting insider threats.

Insider threats may inflict harm on their employers or superiors by exfiltrating valuable information. Similarly, employers may wish to limit exposure of highly sensitive corporate information to employees who have imminent plans to leave the employer, and therefore, do not have aligned interests with their employer.

Providing access to sensitive information to employees who are about to leave may give rise to a risk that may inflict more harm to an employer than the benefit gained by the full productivity of the employee enabled by their full, unrestricted access to sensitive corporate information. For example, some employers, upon restructuring, may elect to immediately terminate employees, and provide compensation to terminated employees, instead of providing long term notice of termination, as employees that have been given notice of future termination may become security risks.

When terminating an employee, the employee becomes a known insider threat. However, employees may choose to voluntarily leave an employer or be either ignorant or forgetful of a duty of confidentiality. Such employees may be unknown insider threats.

Such unknown insider threats may conduct activities on employer devices and networks that is characteristic of known insider threats. Sensitive corporate information is generally stored in electronic form, and accessible through corporate networks. Unknown insider threats may exhibit patterns of behavior and use of employer devices and networks characteristic of known insider threats. It may be advantageous to detect such activity and proactively contain or monitor such potential unknown insider threats.

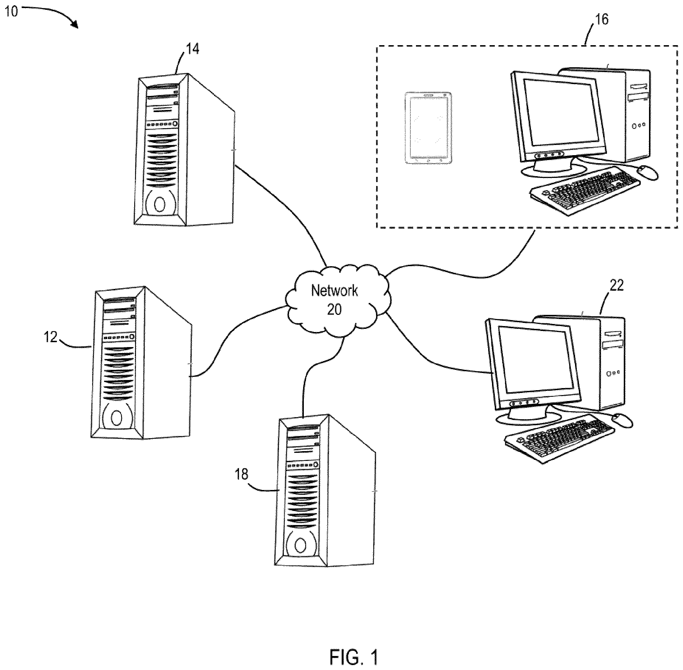

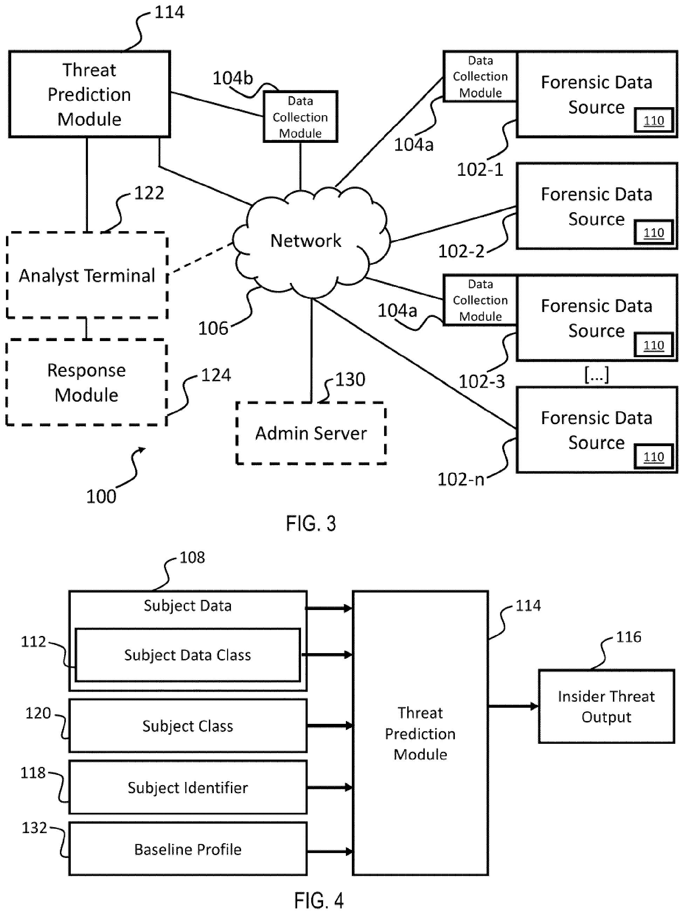

Referring first to Figure 1, shown therein is a block diagram illustrating an insider threat prediction and detection system 10, in accordance with an embodiment. The system 10 includes a threat prediction server platform 12 which communicates with a plurality of data collection devices 14, a plurality of forensic data sources 16, and a plurality of threat response devices 18 via a network 20. The server platform 12 also communicates with a plurality of analyst user devices 22. The threat prediction and detection server platform 12 may be a purpose-built machine designed specifically for predicting or detecting insider threats based on subject data collected from forensic data sources 16 linked to a subject. The server platform 12 may be configured to execute a threat prediction module, such as threat prediction module 114 of Figure 4, for characterizing a threat level of a subject based on subject data collected from forensic data sources 16 via data collection devices 14. Data collection devices 14 may include a data collection module, such as data collection module 104 of Figure 3, for collecting the subject data from the forensic data sources 16. The output of the threat prediction module may be communicated via network 20 to the analyst devices for presentation to a user. Threat response devices 18 may include a response module, such as response module 124, for initiating a response based on information provided by the server platform 12.

The server platform 12, data collection devices 14, forensic data sources 16, threat response devices 18 and user devices 22 may be a server computer, desktop computer, notebook computer, tablet, PDA, smartphone, or another computing device. The devices 12, 14, 16, 18, 22 may include a connection with the network 20 such as a wired or wireless connection to the Internet. In some cases, the network 20 may include other types of computer or telecommunication networks. The devices 12, 14, 16, 18, 22 may include one or more of a memory, a secondary storage device, a processor, an input device, a display device, and an output device. Memory may include random access memory (RAM) or similar types of memory. Also, memory may store one or more applications for execution by processor. Applications may correspond with software modules comprising computer executable instructions to perform processing for the functions described below. Secondary storage device may include a hard disk drive, floppy disk drive, CD drive, DVD drive, Blu-ray drive, or other types of non-volatile data storage. Processor may execute applications, computer readable instructions or programs. The applications, computer readable instructions or programs may be stored in memory or in secondary storage, or may be received from the Internet or other network 20. Input device may include any device for entering information into device 12, 14, 16, 18, 22. For example, input device may be a keyboard, key pad, cursor-control device, touch-screen, camera, or microphone. Display device may include any type of device for presenting visual information. For example, display device may be a computer monitor, a flat-screen display, a projector or a display panel. Output device may include any type of device for presenting a hard copy of information, such as a printer for example. Output device may also include other types of output devices such as speakers, for example. In some cases, device 12, 14, 16, 18, 22 may include multiple of any one or more of processors, applications, software modules, second storage devices, network connections, input devices, output devices, and display devices.

Although devices 12, 14, 16, 18, 22 are described with various components, one skilled in the art will appreciate that the devices 12, 14, 16, 18, 22 may in some cases contain fewer, additional or different components. In addition, although aspects of an implementation of the devices 12, 14, 16, 18, 22 may be described as being stored in memory, one skilled in the art will appreciate that these aspects can also be stored on or read from other types of computer program products or computer-readable media, such as secondary storage devices, including hard disks, floppy disks, CDs, or DVDs; a carrier wave from the Internet or other network; or other forms of RAM or ROM. The computer-readable media may include instructions for controlling the devices 12, 14, 16, 18, 22 and/or processor to perform a particular method.

In the description that follows, devices such as server platform 12, data collection devices 14, forensic data sources 16, threat response devices 18, and user devices 22 are described performing certain acts. It will be appreciated that any one or more of these devices may perform an act automatically or in response to an interaction by a user of that device. That is, the user of the device may manipulate one or more input devices (e.g. a touchscreen, a mouse, or a button) causing the device to perform the described act. In many cases, this aspect may not be described below, but it will be understood.

As an example, it is described below that the devices 12, 14, 16, 18, 22 may send information to the server platform 12. For example, a threat analyst user using the analyst user device 22 may manipulate one or more input devices (e.g. a mouse and a keyboard) to interact with a user interface displayed on a display of the analyst user device 22. Generally, the device may receive a user interface from the network 20 (e.g. in the form of a webpage). Alternatively or in addition, a user interface may be stored locally at a device (e.g. a cache of a webpage or a mobile application).

Server platform 12 may be configured to receive a plurality of information, from each of the plurality of data collection devices 14, forensic data sources 16, threat response devices 18, and user devices 22. Generally, the information may comprise at least an identifier identifying the device or user. For example, the information may comprise one or more of a username, e-mail address, password, or social media handle.

In response to receiving information, the server platform 12 may store the information in storage database. The storage may correspond with secondary storage of the device 12, 14, 16, 18, 22. Generally, the storage database may be any suitable storage device such as a hard disk drive, a solid state drive, a memory card, or a disk (e.g. CD, DVD, or Blu-ray etc.). Also, the storage database may be locally connected with server platform 12. In some cases, storage database may be located remotely from server platform 12 and accessible to server platform 12 across a network for example. In some cases, storage database may comprise one or more storage devices located at a networked cloud storage provider.

The forensic data source 16 may be associated with a threat subject account, or subject identifier, such as subject identifier 118 of Figure 4. Similarly, the user device 22 may be associated with a user account. Any suitable mechanism for associating a device with an account is expressly contemplated. In some cases, a device may be associated with an account by sending credentials (e.g. a cookie, login, or password etc.) to the server platform 12. The server platform 12 may verify the credentials (e.g. determine that the received password matches a password associated with the account). If a device is associated with an account, the server platform 12 may consider further acts by that device to be associated with that account.

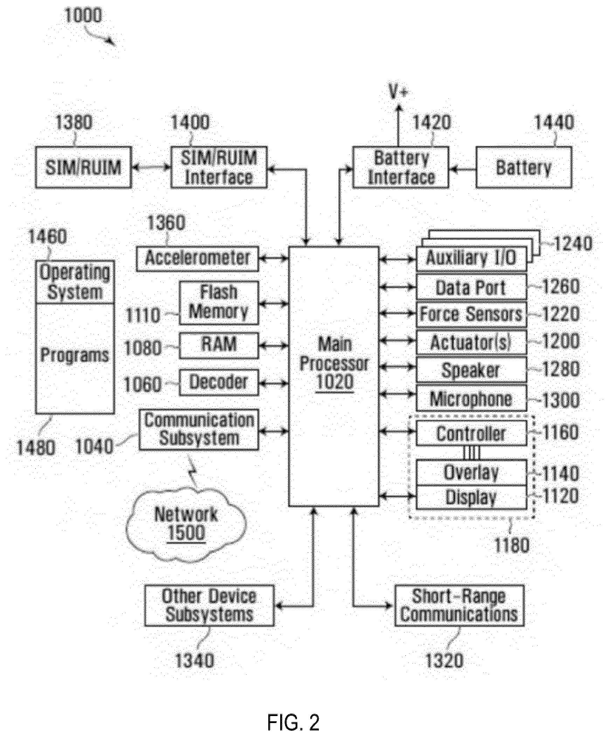

Referring now to Figure 2, Figure 2 shows a simplified block diagram of components of a computing device 1000, such as a mobile device or portable electronic device, according to an embodiment. Software modules described in the disclosure herein may be configured to run on a computing device, such as device 1000 of Figure 2. The device 1000 includes multiple components such as a processor 1020 that controls the operations of the device 1000. Communication functions, including data communications, voice communications, or both may be performed through a communication subsystem 1040. Data received by the device 1000 may be decompressed and decrypted by a decoder 1060. The communication subsystem 1040 may receive messages from and send messages to a wireless network 1500.

The wireless network 1500 may be any type of wireless network, including, but not limited to, data-centric wireless networks, voice-centric wireless networks, and dual-mode networks that support both voice and data communications.

The device 1000 may be a battery-powered device and as shown includes a battery interface 1420 for receiving one or more rechargeable batteries 1440.

The processor 1020 also interacts with additional subsystems such as a Random Access Memory (RAM) 1080, a flash memory 1100, a display 1120 (e.g. with a touch-sensitive overlay 1140 connected to an electronic controller 1160 that together comprise a touch-sensitive display 1180), an actuator assembly 1200, one or more optional force sensors 1220, an auxiliary input/output (I/O) subsystem 1240, a data port 1260, a speaker 1280, a microphone 1300, short-range communications systems 1320 and other device subsystems 1340.

In some embodiments, user-interaction with the graphical user interface may be performed through the touch-sensitive overlay 1140. The processor 1020 may interact with the touch-sensitive overlay 1140 via the electronic controller 1160. Information, such as text, characters, symbols, images, icons, and other items that may be displayed or rendered on a portable electronic device generated by the processor 102 may be displayed on the touch-sensitive display 118.

The processor 1020 may also interact with an accelerometer 1360 as shown in Figure 2. The accelerometer 1360 may be utilized for detecting direction of gravitational forces or gravity-induced reaction forces.

To identify a subscriber for network access according to the present embodiment, the device 1000 may use a Subscriber Identity Module or a Removable User Identity Module (SIM/RUIM) card 1380 inserted into a SIM/RUIM interface 1400 for communication with a network (such as the wireless network 1500). Alternatively, user identification information may be programmed into the flash memory 1100 or performed using other techniques.

The device 1000 also includes an operating system 1460 and software components 1480 that are executed by the processor 1020 and which may be stored in a persistent data storage device such as the flash memory 1100. Additional applications may be loaded onto the device 1000 through the wireless network 1500, the auxiliary I/O subsystem 1240, the data port 1260, the short-range communications subsystem 1320, or any other suitable device subsystem 1340.

For example, in use, a received signal such as a text message, an e-mail message, web page download, or other data may be processed by the communication subsystem 1040 and input to the processor 1020. The processor 1020 then processes the received signal for output to the display 1120 or alternatively to the auxiliary I/O subsystem 1240. A subscriber may also compose data items, such as e-mail messages, for example, which may be transmitted over the wireless network 1500 through the communication subsystem 1040.

For voice communications, the overall operation of the portable electronic device 1000 may be similar. The speaker 1280 may output audible information converted from electrical signals, and the microphone 1300 may convert audible information into electrical signals for processing.

Referring now to Figure 3, pictured therein is a block diagram depicting an insider threat prediction system 100, according to an embodiment. System 100 may correspond to system 10 described above in reference to Figure 1. Threat prediction module 114 may be implemented by threat prediction server platform 12 of Figure 1, data collection modules 104a, 104b may be implemented by data collection devices 14 of Figure 1, response module 124 may be implemented by threat response device 18 of Figure 1, analyst terminal 122 may correspond to analyst user device 22 of Figure 1 and forensic data sources 102 may correspond to forensic data sources 16 of Figure 1. In reference to system 100, employees may be referred to as subjects, and data or information relating to an employee may be referred to as subject data (e.g. subject data 108 in Figure 4). In some examples, subject data 108 may be referred to as artifact data.

The system 100 includes a plurality of forensic data sources 102-1, 102-2, 102-3, ..., 102-n. Forensic data sources 102-1, 102-2, 102-3, ... , 102-n may be referred to collectively as forensic data sources 102 and generically as forensic data source 102. Each forensic data source 102 may comprise an employer issued or owned productivity device (which may be referred to as an endpoint device in some examples), such as a desktop PC, laptop PC, smartphone, tablet, smartwatch, or other device. Generally, the forensic data source 102 includes storage media for storing electronic information (electronically stored information). Forensic data sources 102 may comprise employer hardware servers, email servers, cloud servers, data lakes, databases, or other data sources, which may store information or data that may be linked to an electronic representation of an employee and/ or subject (e.g. unique employee identifier such as a subject identifier 118, as shown in Figure 4). Forensic data sources 102 may include other data sources, such as surveillance camera storage devices or building access record storage devices. Some forensic data sources 102 may be referred to as business systems, such as HR record servers.

Forensic data sources 102 may include a forensic data source class 110. The forensic data source class 110 may be a unique identifier that associates a specific forensic data source 102 with a broad category of forensic data sources. Forensic data source classes may include, for example, laptop PC, desktop PC, smartphone, tablet, smartwatch, employer hardware server, cloud server, database, data lake, surveillance camera storage devices, building access record storage devices, or other classes.

Subject data 108 may take on a plurality of forms. As previously described, forensic data sources 102 may comprise a diversity of devices, such as subject laptop computers, subject mobile phones, employer servers, building access records and more. In general, subject data 108 may be characterized as data relevant to a subject's employment activities, or artifact / metadata type subject data which is more likely to comprise sensitive data, such as emails, instant messages, HR reports and building access data.

Subject data 108 that may be found on a subject laptop may include the entire contents of the storage drive. More specifically, subject data of a subject laptop that may be of particular interest may include, without limitation, installed applications, application installation logs, browser history, calendar entries, email records, file transfer logs, peripheral device attachment logs, screenshot records, instant messenger logs, and videoconferencing logs.

Subject data 108 that may be found on a subject mobile phone may include, without limitation: installed mobile apps, mobile app installation logs, mobile browser history, mobile calendar entries, mobile email records, mobile download logs, Bluetooth device logs, screenshot records, instant messenger logs, and videoconferencing logs.

Subject data 108 that may be found on an employer server may include, without limitation: employee emails, employee calendars, human resources records, employee complaint records, vacation day logs, time off logs, and more.

Subject data 108 that may be found within building access records may include, without limitation: time of building entry for each employee, time of building exit for each employee, time of elevator access for each employee, etc.

Subject data 108 may also include a subject data class 112, to broadly or specifically subcategorize subject data. For example, employee laptop browser history data may belong to a browser history class.

In some examples, depending on system configuration, described subject data may be located on other forensic data sources, or forensic data sources that are not described herein, but may be analogous to forensic data sources described in the present disclosure.

Each subject data class 112 may include a specific structure, and may be evaluated in a specific manner. For example, the browser history data class may be evaluated against a browser history blacklist (for example, job searching websites), while employee email data may be evaluated based on whether emails with attachments have been sent to uncommon domains, or non-organizational domains (for example, Gmail domains).

System 100 further includes a data collection module 104. The data collection module may comprise a number of forms, or a plurality of data collection modules. For example, system 100 may include one or more local data collection modules 104a, each including a software module installed on a forensic data source, as well as one or more network data collection module 104b, wherein each network data collection module 104b is operable to couple to at least one forensic data source 102 through a network 106.

Network 106 may include a private network, such as internal employer network, or a public network, such as the Internet. When communications of sensitive data are transmitted over a public network, such as the internet, an encryption scheme may be applied, such that the data may not be accessed if intercepted during transmission. Network 106 may correspond to network 20 of Figure 1.

Network data collection modules 104b may communicate with forensic data sources 102, through network 106, to access subject data from forensic data sources. Network data collection modules 104b may be provided read access to forensic data sources 102 over network 106, such that network data collection modules 104b can scrape forensic data sources for, and collect, subject data 108.

In some examples, systems may only comprise network data collection modules 104b or local data collection modules 104a, depending on system configuration.

In some examples, network data collection modules 104b may be provided through a software as a service (SaaS) type framework, or may be delivered from a cloud server. For example, an entity, such as an employer may wish to utilize the systems and methods described herein. The employer may subscribe to a service providing for the system described herein, and provide read access to the service, such that a network data collection module 104b may collect subject data 108 from forensic data sources.

Data collection modules 104a, 104b may be coupled to an external server, device (e.g. admin server 130), or controller for configuration. For example, in examples wherein data collection modules 104a, 104b are provided through a SaaS framework, each module may be altered or reconfigured to adjust parameters of data collection. In examples comprising local data collection modules 104a, each local data collection modules 104a may be in communication with an external server (e.g. admin server 130), which may periodically, or continuously reconfigure the data collection module 104a, to adjust parameters of data collection.

Once data collection modules 104a, 104b collect subject data, subject data may be transmitted to threat prediction module 114.

Referring now to Figure 4, shown therein is the threat prediction module 114 of Figure 3 in more detail, according to an embodiment. Threat prediction module 114 may include a software module configured to receive a plurality of inputs, including subject identifier 118 (e.g. employee ID number), subject data 108, subject data class 112 associated with received subject data 108, subject class 120 (e.g. employment position), and output an insider threat output 116. The threat prediction module 114 may process subject data 108 according to subject identifier 118, subject data class 112, baseline profile 132, and subject class 120. In some examples, threat prediction module 114 may be configured to preprocess input data into a format amenable to the creation of an insider threat output 116. In some examples, threat prediction module 114 may be configured to receive an input comprising subject data of a different format than described herein. Threat prediction module 114 may be configured to run on any general-purpose computer processor. In some examples, threat prediction module 114 may be executed on a purpose-built threat prediction device comprising a processor, memory, and network interface.

The threat prediction module 114 may generate the insider threat output 116 through the application of a machine learning model. In some examples, the machine learning model may comprise a neural network. The neural network may include an input layer, one or more hidden layers, and an output layer, configured to receive one or more data inputs at the input layer. Inputs at the input layer may include inputs as described in Figure 4, including subject data 108, subject class 120, subject identifier 18 and baseline profile 132. The neural network may generate an output at the output layer. The output may include a class label and a confidence level. In some examples, the neural network may act as a binary classifier, and may assign one of two threat classes to the subject (e.g. threat, no threat). In another example the neural network may comprise three or more possible classes with each class corresponding to a threat level of the subject (e.g. none, low, medium, or high). The neural network may assign to subject to one of the three or more classes. In some examples, the output layer includes a softmax activation function for representing categorical distribution over class labels.

In some examples, the machine learning model applied by threat prediction module 114 may comprise a model configured for regression, for example, a gradient boosting based model such as XGBoost. In such examples, the threat prediction module 114 may be trained with historical subject data of known insider threats.

In some examples, the threat prediction module 114 may produce the insider threat output 116 through the application of a set of pre-programmed rules. For example, some subject data 108 may be determined by the threat prediction module 114 to exist on a blacklist accessible to the threat prediction module 114, wherein the existence of such subject data on a forensic data source may be suspicious. A point system may be applied by threat prediction module 114.

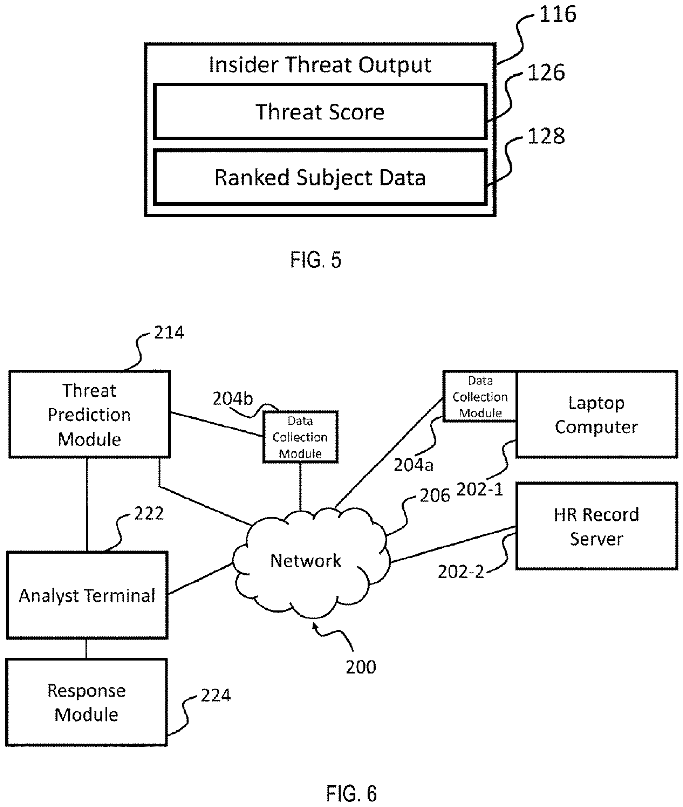

In some examples, the threat prediction module 114 may generate the insider threat output 116 through the application of a combination of a set of pre-programmed rules and machine learning models. For example, the threat prediction module 114 may apply a two-tiered analysis, wherein input data is first run through a trained machine learning model, and the output of the model is then subsequently subjected to a set of pre-programmed rules to calculate a threat score (e.g. threat score 126 of Figure 5).

In some examples, threat prediction module 114 may generate an insider threat output 116 according to a baseline profile 132, generated for a subject (e.g. of a unique subject identifier), subject class 120, or other definable group. Baseline profiles may comprise an individual baseline profile, or a collective baseline profile. For example, for a given subject class 120, threat prediction module 114 may build a collective baseline profile 132 of a number of subjects of the given subject class, such that threat prediction module 114 may compare the collected subject data 108 of a given subject belonging to a given subject class against the mean or median subject of their subject class (intended to represent a range of "normal activity" for someone in the subject class). If a subject's data includes subject data 108 that meaningfully deviates from the baseline profile of their subject class, such as by meaningfully deviating from a mean or median subject of the subject class, threat prediction module 114 may generate an insider threat output 116 identifying the subject as a threat.

In some examples, a baseline profile 132 may be generated for each individual subject. Such a baseline profile may be referred to as an individual baseline profile. Subject data 108 of an individual subject may be collected over a fixed period of time. Using this collected subject data, a baseline profile 132 for the subject in question may be generated. In some examples, threat prediction module 114 may generate the insider threat output 116 according to the subject's individual baseline profile. In some examples, the subject's individual baseline profile may be periodically updated, as a subject's regular activities may shift over time.

In some examples, a baseline profile 132 may be built per organization. Such a baseline profile may comprise a collective baseline profile. Subjects of a given subject class, or all subjects within an organization may regularly perform certain activities. Subject data 108 for all such subjects may be collected to build a baseline profile 132 for a given organization. This baseline profile 132 may be updated continuously or regularly (e.g. once per month or once per year).

In some examples, threat prediction module 114 may be provided through a software as a service (SaaS) type framework, and/or be delivered from a cloud server. For example, an entity, such as an employer may wish to utilize the systems and methods described herein. The employer may configure their internal systems such that the threat prediction module 114, delivered as a SaaS, from a cloud server, is provided collected subject data 108 from forensic data sources 102.

In some examples, baseline profiles 132 may be generated from subject data 108 collected from a plurality of organizations, for the application to a subject within one organization. In such examples, the collected data may be anonymized before storage and processing, to minimize the risk of sensitive data breaches.

Threat prediction module 114 may be coupled to an external server (e.g. admin server 130), device, or controller for configuration. For example, in examples wherein threat prediction module 114 is provided through a SaaS framework, the module may be altered or reconfigured to adjust parameters of insider threat output 116 generation.

Referring now to Figure 5, pictured therein is a block diagram depicting an insider threat output 116, according to an embodiment. The insider threat output 116 comprises data characterizing a subject's threat level. In some examples, insider threat output 116 may include a threat score 126 and ranked subject data 128.

In some examples, threat score 126 may include a single numerical threat score 124, wherein a greater threat score 126 may correspond to an elevated risk of a subject comprising an insider threat. For example, threat score 126 may quantify the risk of a subject comprising an insider threat out of 100. In other examples, threat score 126 may comprise a binary determination of threat level, wherein a value of ° 1" corresponds to a suspected insider threat, while a value of "0" corresponds to a non-insider threat.

In other examples, threat score 126 may comprise a categorical score. For example, in an embodiment, a threat score 126 may be assigned from a fixed set of categories consisting of: none, low, medium, or high. In some examples, a categorical threat score may be determined by converting a numerical threat score to a categorical threat score, wherein each threat category corresponds to a range of possible numerical threat score values.

The insider threat output 116 may further comprise ranked subject data 128, comprising a summary or description of all collected subject data 108. In examples wherein the threat score 126 comprises a numerical threat score 126, subject data 108 within ranked subject data 128 may be sorted according to contribution to the threat score 126. For example, some methods employed by threat prediction module 114 for generating a threat score 126 may assign a sub-score to each piece of subject data 108, such that all sub-scores may be summed to calculate a final threat score 126. In such examples, high value subject data may be presented first in insider threat output 116. In some examples, only subject data 108 comprising a sub-score above a certain numerical or percentile cutoff may be included in the insider threat output 116, which may advantageously reduce the file size of the insider threat output 116.

In some examples, threat prediction module 114 may apply a weighting matrix to processed subject data 108, such that various pieces of subject data provide a weighted contribution to a final threat score determination. In some examples, the ranked subject data 128 may be ranked and displayed according to weights associated with subject data in a weighting matrix.

In other examples, the method applied by threat prediction module 114 to generate insider threat output 116 may not provide for the capability of ranking subject data 108 by contribution to threat level. In such examples, a summary of all subject data 108 may be contained within the insider threat output 116. In such examples, subject data 108 may be grouped and ranked by subject data class 112.

In some examples of system 100, components of system 100 may be configured to operate continuously or regularly. For example, data collection modules 104a, 104b may be configured to continuously scrape forensic data sources 102 for new or additional data. Threat prediction module 114 may be configured to analyze subject data 108 immediately after receiving subject data 108 or after subject data 108 is updated. In other examples, components of system 100 may be configured to operate periodically. For example, data collection modules 104a, 104b may be configured to scrape forensic data sources 102 at a defined interval, such as once per day, for new or additional data. Threat prediction module 114 may be configured to analyze subject data 108 once per day, after receiving subject data 108.

In some examples of system 100, each generated insider threat output 116 may be sent to a client or employer computing device for storage or archival. In some examples, insider threat output 116 may be transmitted over network 106.

Referring again to Figure 3, system 100 may further comprise an analyst terminal 122. The analyst terminal 122 may be a software portal or interface accessible through an electronic device, or a hardware terminal. The analyst terminal 122 may be operated by a human analyst. The analyst terminal 122 may be coupled to the threat prediction module 114, either directly (e.g. the analyst terminal 122 may be connected to threat prediction module 114 without a network intermediary), or through a network 106, such that insider threat output 116 data may be delivered from the threat prediction module 114 to the analyst terminal 122.

In some examples, only insider threat outputs 116 comprising a threat score 126 above a certain threshold or assigning a certain class/having a certain threat categorization/class may be transmitted to an analyst terminal 122 for display by the analyst terminal 122 to an analyst for further review. Additionally, insider threat outputs 116 comprising a threat score 126 below a certain threshold may be ignored.

In some examples, system 100 may further comprise a response module 124. The response module 124 may be coupled (e.g. through network 106) to the threat prediction module 114, such that insider threat output 116 data may be delivered from the threat prediction module 114 to the response module 124. In such examples, the response module 124 may be pre-configured to respond to insider threat output 116 when received. For example, the response module 124 may be preconfigured to automatically and remotely disable a subject's personal forensic data sources 102 if the threat score 126 is above a preset threshold. For example, the response module 124 may send a command to a forensic data source 102, such that when the command is received by the forensic data source 102, the forensic data source 102 may be disabled. In other examples, response module 124 may be preconfigured to automatically notify human resources personnel if the threat score 126 is above a preset threshold, such as by transmitting the insider threat output 116 to a device or account linked to the human resources personnel. In other examples, response module 124 may be preconfigured to reconfigure data collection modules 104a, 104b to change data collection settings if the threat score 126 is above a preset threshold. Such data collection settings may comprise increased forensic data source monitoring and increased subject data 108 collection. Increased forensic data source monitoring may comprise, for example, increasing frequency of a periodic data collection interval by the data collection modules 104a, 104b, or changing the data collection module 104a, 104b configuration from periodic collection to continuous collection. In other examples, other data collection parameters may be modified.

In some examples, the response module 124 may be coupled to the analyst terminal 122. In such examples, insider threat output 116 may be delivered to the analyst terminal 122, for review by a human analyst. The analyst terminal 122 may be configured to generate and display a user interface presenting the threat score 126, as well as ranked subject data 128, for review by the analyst. The analyst may review such information with skill and judgment, and determine an appropriate response action. Through interaction with an input device of the analyst terminal 122, the analyst may direct the response module 124 to generate a response. For example, the analyst may provide input to the user interface of the analyst terminal 122, which may then be communicated to the response module 124.

Depending on the contents of the insider threat output 116, the analyst may choose a single response from a plurality of response options using an input device of analyst terminal 122. For example, the analyst terminal may be configured to generate and display a user interface presenting a plurality of response options for a given insider threat output 116. Response options for display may be predetermined based on determined threat score 126. For example, when threat score 126 is of a high value, the analyst terminal may generate and display a user interface presenting highly escalating response options, such as "disable forensic data sources". In examples wherein threat score 126 is of a relatively low value, less severe response options may be presented, for example, the response may comprise an increased subject data collection rate, or forward insider threat output to human resources personnel. In some examples, the analyst may choose a single response from a plurality of response options using an input device of analyst terminal 122.

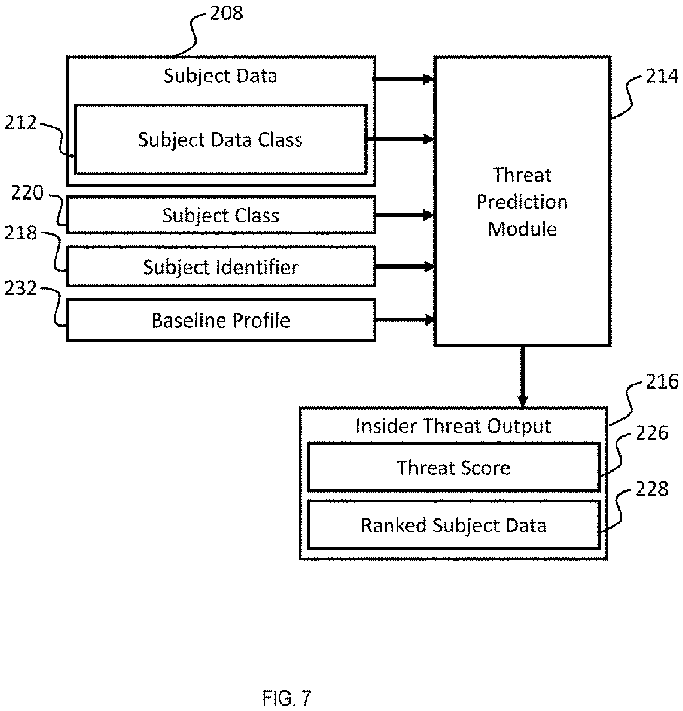

Referring now to Figures 6 and 7, in the example embodiment therein, a threat detection system 200 may comprise two forensic data sources, an employee laptop computer 202-1, and an employer HR record server 202-2. System 200 further comprises a network 206, data collection modules 204a, 204b, threat prediction module 214, analyst terminal 222 and response module 224. Components of system 200 may be analogous to components of system 100, with reference characters incremented by 100. Description above in reference to system 100 may apply to system 200.

In the example embodiment of system 200, the laptop computer 202-1 is the primary productivity device of the subject. The subject is employed by an entity who is administering the system 200. The subject uses laptop computer 202-1, including installed software, to conduct regular employment activities. Routinely, the subject may utilize laptop computer 202-1 to draft and review Microsoft Word documents, draft and review Microsoft Excel spreadsheets, draft and review email communications, use an instant messenger application to communicate with team members, log and track activities using an electronic calendar application, participate in videoconferences, download and view PDF format documents, view images, and browse the world wide web. Data associated with these activities may be stored on laptop computer 202-1.

The subject belongs to subject class 220, which corresponds to a mid-level administrative employee classification in the example of system 200. Subject class 220 comprises information that may be used to determine the expected regular activities of the employee.

In some examples, the expected regular activities of a subject may not be known. Data collection module 204a may collect subject data from all subjects of a given subject class for a fixed period of time, or continuously. Data collection module 204a may build a baseline profile 232 for the individual subject according to this collected subject data.

In examples where the expected regular activities are not known, the subject data 208 may be evaluated against this collected baseline profile 232. For example, it may be determined that the subject regularly visits job searching websites. Browser history comprising job searching websites may be deemed to be within the expected regular activities of a subject of the subject class. In such an example, visiting a job searching website may not give rise to an elevated threat score on a subject's insider threat output 226.

In operation of system 200, data collection module 204a continuously monitors laptop computer 202-1 and collects subject data 208. Subject data 208 is collected more widely than the expected activities of the subject, as defined by the subject class.

For example, the subject may not be expected to routinely copy large amounts of data during their employment activities. Data collection module 204a may be configured to collect subject data 208 according to the subject class 220, wherein unexpected activities are monitored. In other examples, wherein a subject is expected to routinely copy large amounts of data during their employment activities, such activities may not be monitored, and therefore, data collection module 204a may not collect associated subject data.

Additionally, in operation of system 200, network data collection module 204b continuously monitors HR records server 202-2, and collects subject data 208. Subject data 208 that may be collected from HR records server 202-2 may include performance reports, time off requests, records of absence, discipline reports, and complaint records.

After collection, subject data 208 may be provided to threat prediction module 214 as an input, along with associated subject data class 212, subject class 220, baseline profile 232 and subject identifier 218, as shown in Figure 7. The threat prediction module 214 may output an insider threat output 216 corresponding to the provided inputs.

The insider threat output 216 may comprise a calculated, comprehensive threat score 226, as well as ranked subject data 228.

The insider threat output 226 may be provided to analyst terminal 222 for further analysis. The analyst terminal 222 may receive the insider threat output 216, and may present the insider threat output to a skilled analyst. The analyst may review the information within the insider threat output 216, for example, the ranked subject data 228, or subject data class contributing most to the computed threat score 226, and may conduct a detailed review of the provided data.

After reviewing this provided insider threat output 216, the analyst may select from a plurality of suggested responses. For example, analyst terminal 122 may reconfigure a user interface, such that the analyst may be presented with options on a display device of the analyst terminal 122. The analyst may select, by interacting with an input device of the analyst terminal 122, to configure the analyst terminal 122 to forward the insider threat output 216 to human resources personnel, or configure analyst terminal 122 to direct data collection modules 204a, 204b to increase data collection rate, such that the insider threat output 216 may be regenerated with a richer subject data 208 set.

In a specific example, in operation of system 200, data collection modules 204a, 204b may collect subject data 208 comprising browsing history data comprising job search website entries, an application installation record comprising the recent installation of a cloud storage application, several emails sent to non-organizational type domains, and HR time off request data comprising an increase in recent time off requests relative to the expected baseline.

This subject data 208 may be passed to threat prediction module 214 for the generation of an insider threat output 216.

The generated insider threat output 216 may comprise a threat score 226 and ranked subject data 228. The threat score may comprise a score of 80/100. The ranked subject data 228 may comprise the following entries and coefficients, wherein coefficients comprise contribution to threat score 226: browsing history data comprising job search website entries (coefficient = 35), an application installation record comprising the recent installation of a cloud storage application (coefficient = 25), several emails sent to non-organizational type domains (coefficient = 10), and HR time off request data comprising an increase in recent time off requests relative to the expected baseline (coefficient = 30). In the example of system 200, a threat score of 80/100 may comprise a relatively high risk of insider threat status for the subject. In some cases, the threat score of 80 may be used in a threat class determination and a "high" threat class may be assigned by the module.

The contents of this insider threat output 216 may be passed to analyst terminal 222. The analyst terminal 222 may generate a graphical user interface for the display of the contents of insider threat output 216. A human analyst may review the contents of insider threat output 216, and select a presented option, using an input device of analyst terminal 222. For example, the analyst may select the option: "transfer insider threat output to HR" using an input device of analyst terminal 222. A command associated with this input may be transmitted to response module 224 from analyst terminal 222(e.g. through sever 206), which may carry out the selected response.

In another specific example, in operation of system 200, data collection modules 204a, 204b may collect subject data 208 comprising browsing history data comprising career sections of competitor organizations, browsing history comprising e-commerce entries associated with competitor organizations, and records of large file transfers (over 2GB). This subject data 208 may be passed to threat prediction module 214 for the generation of an insider threat output 216.

The generated insider threat output 216 may comprise a threat score 226, and ranked subject data 228. The threat score may comprise a score of 30/100. The ranked subject data 228 may comprise the following entries and coefficients, wherein coefficients comprise contribution to threat score 226: browsing history data comprising career sections of competitor organizations (20), browsing history comprising e-commerce entries associated with competitor organizations (5), and records of large file transfers (5). In the example of system 200, a threat score of 30/100 may comprise a relatively low risk of insider threat status for the subject. In some cases, the threat score of 30 may be used in a threat class determination and a "low" threat class may be assigned by the module.

The contents of this insider threat output 216 may be passed to analyst terminal 222. The analyst terminal 222 may generate a graphical user interface for the display of the contents of insider threat output 216. A human analyst may review the contents of insider threat output 216, and select a presented option, by interacting with an input device of analyst terminal 222. For example, the analyst may select the option: "ignore". When such an option is selected, no follow up action may be carried out by response module 224 or analyst terminal 222.

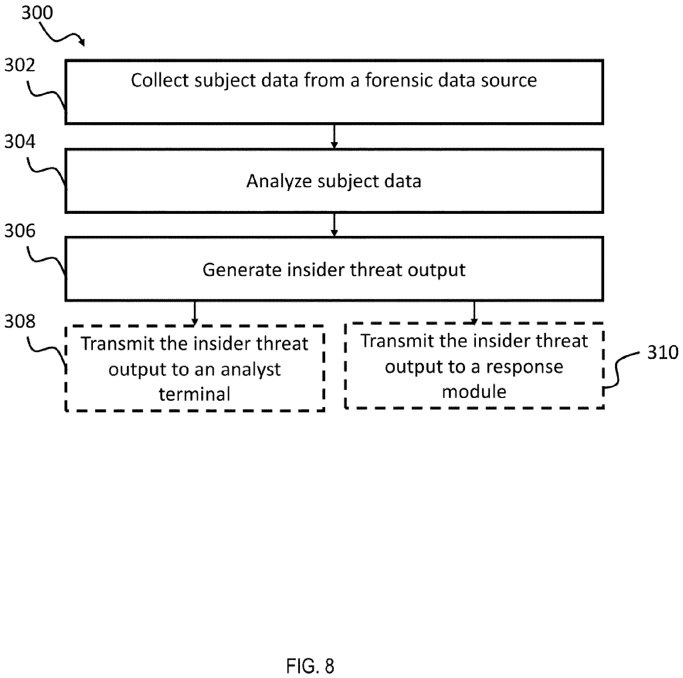

Referring now to Figure 8, pictured therein is a flowchart depicting a computer-implemented method 300 of insider threat prediction, according to an embodiment. Method 300 comprises steps 302, 304, 306 and optionally, step 308 or step 310. Description above in reference to systems 10, 100 and 200 above may apply to method 300.

At step 302, subject data is collected from a forensic data source.

At step 304, subject data is analyzed.

At step 306, an insider threat output is generated.

At step 308, the insider threat output is transmitted to an analyst terminal.

At step 310, the insider threat output is transmitted to a response module.

While the above description provides examples of one or more apparatus, methods, or systems, it will be appreciated that other apparatus, methods, or systems may be within the scope of the claims as interpreted by one of skill in the art.

## Claims

1. An electronic security system (10) comprising:
at least one processor (1020);
at least one memory (1000);
a forensic data source (16, 102-n) stored on the at least one memory;
a threat prediction module (114) stored on the at least one memory; and
a data collection module (104) stored on the at least one memory, configured, to when executed by the at least one processor:
collect subject data (108) of a subject from the forensic data source (16); and
transmit the subject data to the threat prediction module (114);
wherein the threat prediction module is configured to, when executed by the at least one processor:
receive the subject data (108) from the data collection module (104); and
analyze the subject data to generate an insider threat output characterizing the insider threat level (126) of the subject.

2. The system of claim 1, wherein the forensic data source comprises a plurality of forensic data sources (16).

3. The system of any one of claims 1 to 2, wherein the forensic data source (16) includes any one or more of personal computers, smartphones, building access systems or surveillance systems.

4. The system of any one of claims 1 to 3, wherein the insider threat output generation comprises applying a machine learning based method to subject data.

5. The system of any one of claims 1 to 4, wherein the insider threat output generation comprises comparison of the subject data to a baseline profile (132).

6. The system of any one of claims 1 to 5, wherein the subject data comprises subclasses, wherein the subclasses comprise world wide web browsing history, peripheral device logs, email records, file transfer records or calendar data.

7. The system of any one of claims 1 to 6, further comprising a response module stored on the at least one memory, wherein the response module is configured to, when executed by the at least one processor: receive the insider threat output from the threat prediction module, and execute a response.

8. The system of any one of claims 1 to 7, wherein the subject data is collected continuously.

9. A computer-implemented method of insider threat prediction, the method comprising:
collecting subject data of a subject from a forensic data source (302) via a data collection module;
analyzing the subject data (304) via a threat prediction module; and
generate an insider threat output (306) via the threat prediction module characterizing the insider threat level of the subject.

10. The method of claim 9, wherein the forensic data source (16) comprises a plurality of forensic data sources (102-1-n).

11. The method of any one of claims 1 to 10, wherein the forensic data source (16, 102-n) comprises personal computers, smartphones, building access systems or surveillance systems.

12. The method of any one of claims 1 to 11, wherein the insider threat output generation comprises applying a machine learning based method to the subject data.

13. The method of any one of claims 1 to 12, wherein the insider threat output generation comprises comparison of the subject data to a baseline profile.

14. The method of any one of claims 1 to 13, wherein the subject data comprises subclasses, wherein the subclasses comprise world wide web browsing history, peripheral device logs, email records, file transfer records or calendar data.

15. The method of any one of claims 1 to 14, wherein the subject data is collected continuously.
